# EUROPÄISCHE PATENTSCHRIFT

(11) **EP 3 122 436 B1**
(45) Veröffentlichungstag und Bekanntmachung des Hinweises auf die Patenterteilung: **07.08.2019**
(21) Anmeldenummer: 15711150.1
(22) Anmeldetag: 19.03.2015
(51) Int. Cl.: B01D 35/00, B01D 35/30

(54) **VERFAHREN ZUR HERSTELLUNG EINES FILTERKOPFES UND FILTERKOPF**
METHOD OF MAKING FILTER SUPPORT AND FILTER SUPPORT
METHODE DE FABRICATION DE SUPPORT DE FILTRE ET SUPPORT DE FILTRE

(30) Priorität: 24.03.2014 DE 102014205449; 25.02.2015 DE 102015203390
(43) Veröffentlichungstag der Anmeldung: 01.02.2017
(73) Patentinhaber: Mahle International GmbH, 70376 Stuttgart (DE)
(72) Erfinder: DUNSCH, Robert, 71665 Vaihingen (DE); HAALA, Lutz, 74182 Obersulm (DE)
(74) Vertreter: BRP Renaud & Partner mbB Rechtsanwälte Patentanwälte Steuerberater
(86) Internationale Anmeldenummer: PCT/EP2015/055804
(87) Internationale Veröffentlichungsnummer: WO 2015/144560

(56) Entgegenhaltungen:
- EP-A1- 2 233 189
- EP-A1- 2 368 615
- WO-A1-2012/168639
- DE-B3-102012 000 876
- DE-C1- 19 536 613

## Beschreibung

Die vorliegende Erfindung betrifft ein Verfahren zur Herstellung eines Filterkopfes aus Kunststoff mit einem zumindest teilweise darin eingespritzten Gewindestutzeneinsatz. Die Erfindung betrifft außerdem einen solchen Filterkopf.

Aus der WO 2012/168639 A1 ist ein Filterkopf aus Kunststoff mit einem metallischen und darin eingegossenen Gewindestutzeneinsatz bekannt. Um die zur Abdichtung erforderlichen Kräfte aufnehmen zu können, weist der Gewindestutzeneinsatz radiale Arme auf, die in einem Ring münden und über den der Gewindestutzeneinsatz gegenüber dem aus Kunststoff ausgebildeten Filterkopf abgedichtet sind.

Bei sogenannten Spin-on Filtern ist im Kraftfahrzeug ein Aufnahmebauteil bzw. Befestigungsbauteil (Filterkopf) mit den jeweiligen Zu- und Abführkanälen vorgesehen. Dieser Filterkopf wird üblicherweise aus Metall gefertigt, da eine Herstellung aus Kunststoff Beständigkeitsprobleme, hervorgerufen beispielsweise durch das sogenannte Kriechen des Kunststoffs, zeigt. Sollen demzufolge Filterköpfe aus Kunststoff ausgebildet werden, muss ein vergleichsweise aufwändiger und teurer metallischer Gewindestutzeneinsatz in den Kunststoff eingepresst werden. Dieser Einsatz muss darüber hinaus aufwändig gedichtet werden und verteuert den gesamten Filterkopf. Aus dem Kraftstofffilterbereich sind auch Lösungen bekannt, bei welchen metallische Gewindestutzeneinsätze als Drehteil mit geringer Toleranz eingesetzt werden, wobei derartige gedrehte Gewindestutzeneinsätze zwar vergleichsweise teuer sind, standardmäßig jedoch einfach radial/radial gegenüber dem Kunststoffspritzgießwerkzeug abgedichtet werden können.

Die vorliegende Erfindung beschäftigt sich mit dem Problem, ein verbessertes Verfahren zur Herstellung eines Filterkopfes anzugeben, das insbesondere eine vereinfachte und kostengünstigere Herstellung ermöglicht.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, bei der Herstellung eines Filterkopfes aus Kunststoff einen metallischen und als Kaltfließpressteil ausgebildeten Gewindestutzeneinsatz vorzusehen und diesen derart im Kunststoffspritzgusswerkzeug zu halten, dass zumindest geringfügige Maßtoleranzen desselben ausgleichbar sind, so dass der Gewindestutzeneinsatz mit größerer Toleranz und damit kostengünstiger gefertigt werden kann. Bei dem erfindungsgemäßen Verfahren zur Herstellung des Filterkopfes als Kunststoffspritzgussteil wird zunächst der Gewindestutzeneinsatz in eine komplementäre zylindrische Aufnahme des Kunststoffspritzgusswerkzeugs eingelegt und soweit in die Aufnahme geschoben, bis er mit einer axialen Dichtfläche an einem Aufnahmerand der Aufnahme anliegt. Gleichzeitig oder anschließend wird ein Dorn durch den Gewindestutzeneinsatz geschoben, bis dieser formschlüssig in eine gegenüberliegende Wand eines Schiebers des Spritzgusswerkzeugs eingreift, wobei zwischen dem Gewindestutzeneinsatz und der Wand des Schiebers ein Abstand verbleibt, der später mit Kunststoff ausgespritzt wird. Nun wird Kunststoff in das Kunststoffspritzgusswerkzeug eingespritzt. Der Druck des einspritzenden Kunststoffes drückt dabei den Gewindestutzeneinsatz mit seiner axialen Dichtfläche gegen das Spritzgusswerkzeug und dichtet diesen dort ab. Dies wird von dem den Gewindestutzeneinsatz stirnseitig beaufschlagenden Kunststoff bewirkt. Der zwischen dem Gewindestutzeneinsatz und dem Schieber verbleibende Raum wird vollständig mit Kunststoff ausgespritzt, so dass etwaige Maßtoleranzen des Gewindestutzeneinsatzes problemlos ausgleichbar sind. Nach dem Aushärten des Kunststoffes wird der Dorn aus dem Gewindestutzeneinsatz gezogen, der Schieber verschoben und der Filterkopf aus dem Kunststoffspritzgusswerkzeug entfernt. Durch die vollständige Einbettung der der Aufnahme abgewandten Schulter des Gewindestutzeneinsatzes, kann dieser zugleich auch mit höherer Auszugskraft in den Kunststoff eingebettet werden. Darüber hinaus muss auch keine axiale Abdichtung des Gewindestutzeneinsatzes an dem Schieber bewirkt werden.

Zweckmäßig wird in der Aufnahme des Kunststoffspritzgusswerkzeugs eine komplementär zum Gewindestutzeneinsatz ausgebildete Hülse eingesetzt. Diese Hülse kann beispielsweise als Adapter zum Einspritzen von Gewindestutzeneinsätzen mit kleineren Durchmessern verwendet werden. Mittels derartiger Hülsen unterschiedlichen Durchmessers lässt sich somit das Kunststoffspritzgusswerkzeug flexibel auf unterschiedliche Gewindestutzeneinsätze umrüsten.

Die Erfindung beruht weiter auf dem allgemeinen Gedanken, an einem mit dem zuvor beschriebenen Verfahren hergestellten Filterkopf radial verlaufende Kunststoffrippen vorzusehen, die strahlenförmig vom Gewindestutzeneinsatz ausgehen. Die Kunststoffrippen verlaufen dabei in radialer Richtung von innen vom Gewindestutzeneinsatz nach außen zu einer axialen Dichtfläche und münden in diese, bzw. gehen fluchtend in diese über. Sowohl die Kunststoffrippen als auch die Dichtfläche sind dabei integral am Filterkopf, das heißt aus Kunststoff, ausgebildet. Durch die vergleichsweise hochgezogenen Kunststoffrippen, die bis an die axiale Dichtfläche geführt sind, weisen diese eine deutlich erhöhte Steifigkeit im Vergleich zu bisher deutlich unterhalb der Dichtfläche endenden Kunststoffrippen auf. Hierdurch kann ein die Dichtwirkung beeinträchtigendes Kriechen erheblich reduziert werden. Zudem kann der als Kaltfließpressteil hergestellte Gewindestutzeneinsatz kostengünstig hergestellt werden. Die Kunststoffrippen sorgen darüber hinaus dafür, dass die Kräfte der montierten Filterkartusche, des sogenannten Spin-Ons, welche aufgebracht werden müssen, damit die axiale Dichtung dichtet, optimal zum Gewindestutzeneinsatz abgeführt werden können.
Bei einer vorteilhaften Weiterbildung des erfindungsgemäßen Filterkopfes gehen die Kunststoffrippen radial außen fluchtend in die axiale Dichtfläche über. Hierdurch kann ein besonders hohes und damit steifes Querschnittsprofil der Kunststoffrippen geschaffen werden, wodurch das Kriechen deutlich reduziert werden kann.

Zweckmäßig besitzt der Gewindestutzeneinsatz eine Verdrehsicherung, insbesondere eine Rändelung an einer Außenmantelfläche. Um ein Filterelement, insbesondere ein Ringfilterelement auf den Gewindestutzeneinsatz aufschrauben zu können, muss dieser ein entsprechendes Gegendrehmoment aufbringen können, was durch die erfindungsgemäße Verdrehsicherung gewährleistet wird. Diese Verdrehsicherung ändert die ursprünglich zylindrische und damit runde Außenkontur des Gewindestutzeneinsatzes in eine unrunde Außenkontur, beispielsweise durch radiale Vorsprünge, und ermöglicht dadurch ein Verzahnen des Gewindestutzeneinsatzes mit dem Kunststoff. Durch die erfindungsgemäß vorgesehene Verdrehsicherung kann ein besonders zuverlässiges und festes Fixieren des Gewindestutzeneinsatzes in dem aus Kunststoff gespritzten Filterkopf erreicht werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: eine Schnittdarstellung durch ein Kunststoffspritzgusswerkzeug zur Herstellung eines Filterkopfes,
- Fig. 2: einen in einen erfindungsgemäßen Filterkopf eingegossenen Gewindestutzeneinsatz,
- Fig. 3: eine Ansicht auf einen Gewindestutzeneinsatz.

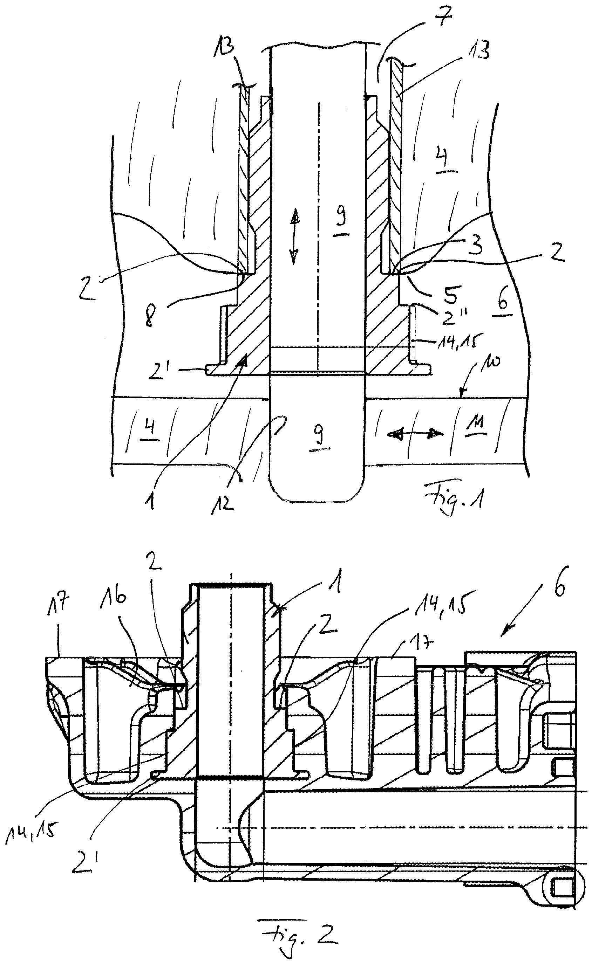

Entsprechend den Figuren 1 bis 3, weist ein metallischer Gewindestutzeneinsatz 1 zumindest eine Radialschulter 2 mit einer axialen Dichtfläche 3 auf. Über diese axiale Dichtfläche 3 kann der Gewindestutzeneinsatz 1 beim Spritzgießen eines Filterkopfes 6 in einem Kunststoffspritzgießwerkzeug 4 (vgl. Fig. 1) gegenüber einem Aufnahmerand 8 des Spritzgießwerkzeugs 4 abgedichtet werden. In gleicher Weise ist auf der gegenüberliegenden Seite ebenfalls eine Radialschulter 2' angeordnet.

Das Herstellen des Filterkopfes 6 erfolgt dabei erfindungsgemäß wie folgt: Zunächst wird der als Kaltfließpressteil ausgebildete Gewindestutzeneinsatz 1 in eine komplementäre zylindrische Aufnahme 7 des Kunststoffspritzgusswerkzeugs 4 eingelegt (vgl. Fig. 1) und soweit in die Aufnahme 7 geschoben, bis er mit seiner axialen Dichtfläche 3 an einem Aufnahmerand 8 anliegt. Gleichzeitig oder anschließend wird ein Dorn 9 durch den Gewindestutzeneinsatz 1 geschoben, bis dieser formschlüssig in eine Ausnehmung 12 einer gegenüberliegenden Wand 10 eines Schiebers 11 des Spritzgusswerkzeugs 4 eingreift, wobei zwischen dem Gewindestutzeneinsatz 1 und der Wand 10 des Schiebers 11 ein Abstand verbleibt, der später mit Kunststoff ausgespritzt wird und beim Spritzgießen dazu dient, den Gewindestutzeneinsatz 1 gegen die Wand 5 zu drücken. Nun wird Kunststoff in das Kunststoffspritzgusswerkzeug 4 eingespritzt und drückt dabei den Gewindestutzeneinsatz 1 mit seiner axialen Dichtfläche 3 gegen den Aufnahmerand 8, das heißt im vorliegenden Fall nach oben. Der zwischen dem Gewindestutzeneinsatz 1 und dem Schieber 11 verbleibende Raum wird vollständig mit Kunststoff ausgespritzt, so dass etwaige Maßtoleranzen des Gewindestutzeneinsatzes 1 problemlos kompensiert werden können. Nach dem Aushärten des Kunststoffes wird der Dorn 9 gezogen, der Schieber 11 verschoben und der Filterkopf 6 aus dem Kunststoffspritzgusswerkzeug 4 entfernt. Durch die vollständige Einbettung der der Aufnahme 7 abgewandten Schulter 2' des Gewindestutzeneinsatzes 1 in den Kunststoff, kann dieser zugleich auch mit höherer Auszugskraft in den Kunststoff eingebettet werden. Darüber hinaus muss auch keine axiale Abdichtung des Gewindestutzeneinsatzes 1 an dem Schieber 11 bewirkt werden.

Dabei ist gemäß der Fig. 1 in der Aufnahme 7 des Kunststoffspritzgusswerkzeugs 4 eine komplementär zum Gewindestutzeneinsatz 1 ausgebildete Hülse 13 eingesetzt. Diese Hülse 13 kann beispielsweise als Adapter zum Einspritzen von Gewindestutzeneinsätzen 1 mit kleineren Durchmessern verwendet werden. Mittels derartiger Hülsen 13 unterschiedlichen Durchmessers lässt sich somit das Kunststoffspritzgusswerkzeug 4 flexibel auf unterschiedliche Gewindestutzeneinsätze 1 umrüsten. Die Hülse 13 kann auch einen integralen Bestandteil des Spritzgusswerkzeugs 4 bilden.

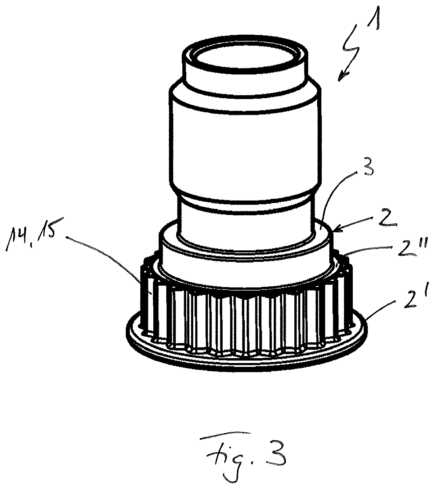

Im Unterschied zu bisherigen aus dem Stand der Technik bekannten Gewindestutzeneinsätzen ist es mit dem als Kaltfließpressteil ausgebildeten Gewindestutzeneinsatz 1 erstmals möglich, diesen in axialer Richtung gegenüber dem Kunststoffspritzgießwerkzeug 4, insbesondere über seine Radialschulter 2 mit seiner axialen Dichtfläche 3 abzudichten. Das Kunststoffspritzgießwerkzeug 4 dient dabei der Herstellung des in Fig. 3 gezeigten Filterkopfes 6 aus Kunststoff, in welchen der Gewindestutzeneinsatz 1 eingegossen ist. Beim Einspritzen des Kunststoffs in eine Kavität des Kunststoffspritzgießwerkzeugs 4 bewirkt der unter Druck eingespritzte Kunststoff, dass der Gewindestutzeneinsatz 1 über seine Radialschulter 2 mit seiner axialen Dichtfläche 3 gegen den Aufnahmerand 8 des Spritzgießwerkzeugs 4 gedrückt und dadurch abgedichtet wird. Durch das Vorsehen zumindest einer Radialschulter 2 und der damit wirksamen axialen Dichtfläche 3 und des Abstandes zwischen der Schulter 2' zur Wand 10 des Schiebers 11 ist es erstmals möglich, den Gewindestutzeneinsatz 1 als Kaltfließpressteil und damit vergleichsweise kostengünstig herzustellen. Bisher wurden Gewindestutzeneinsätze lediglich radial abgedichtet, was eine lediglich geringe Toleranz, d.h. eine hohe Fertigungsgenauigkeit des Gewindestutzeneinsatzes 1 erforderte. Durch die nunmehr erstmalig erreichte axiale Abdichtung und die Möglichkeit Maßtoleranzen ausgleichen zu können, können auch größere Toleranzen und damit größere Fertigungsungenauigkeiten des erfindungsgemäßen Gewindestutzeneinsatzes 1 hingenommen werden, sodass dieser als kostengünstiges Kaltfließpressteil ausgebildet werden kann.

Betrachtet man die Figuren 1 bis 3 weiter, so kann man erkennen, dass der Gewindestutzeneinsatz 1 eine Verdrehsicherung 14, insbesondere eine Rändelung 15 an einer Außenmantelfläche aufweist. Über diese Rändelung 15, die vom Kunststoff im Kunststoffspritzgießwerkzeug 4 umschlossen wird, erfolgt ein Verzahnen des Gewindestutzeneinsatzes 1 im Kunststoff des Filterkopfes 6 und damit ein drehfestes Verankern desselben im Filterkopf 6.

Betrachtet man die Figur 3 weiter, so kann man erkennen, dass der erfindungsgemäße Gewindestutzeneinsatz 1 insgesamt drei radial gestufte Radialschultern 2, 2' und 2" aufweist, wobei zwischen der Radialstufe 2' und der Radialstufe 2" die Verdrehsicherung 14 angeordnet ist.

Gemäß der Figur 2 ist ein in dem Kunststoffspritzgießwerkzeug 4 gespritzter erfindungsgemäßer Filterkopf 6 gezeigt, welcher radial verlaufende Kunststoffrippen 16 aufweist, die strahlenförmig vom Gewindestutzeneinsatz 1 ausgehen. Außen münden sie in eine axiale Dichtfläche 17, welche gegen ein nicht gezeigtes Filterelement in dichtender Weise gepresst wird. Die Kunststoffrippen 16 dienen als Verstärkungsrippen und verhindern bzw. reduzieren zumindest ein Kriechen des Kunststoffs während des Betriebs einer mit einem derartigen Filterkopf 6 ausgestatteten Filtereinrichtung, beispielsweise einem Ölfilter.

Die Kunststoffrippen 16 verlaufen dabei vorzugsweise nicht nur in radialer Richtung von innen vom Gewindestutzeneinsatz 1 nach außen zur axialen Dichtfläche 17 und münden in diese, sondern gehen sogar fluchtend in diese über. Hierdurch kann ein besonders hohes und damit steifes Querschnittsprofil der Kunststoffrippen 16 geschaffen werden, wodurch das Kriechen deutlich reduziert werden kann.
Sowohl die Kunststoffrippen 16 als auch die Dichtfläche 17 sind dabei integral am Filterkopf, das heißt einstückig mit diesem aus Kunststoff ausgebildet. Durch die vergleichsweise hochgezogenen Kunststoffrippen 16, die bis an die axiale Dichtfläche 17 geführt sind, weisen diese somit eine deutlich erhöhte Steifigkeit im Vergleich zu bisher deutlich unterhalb der Dichtfläche 11 endenden Kunststoffrippen auf. Hierdurch kann das die Dichtwirkung beeinträchtigende Kriechen erheblich reduziert werden. Die Kunststoffrippen 16 sorgen darüber hinaus dafür, dass die Kräfte der montierten Filterkartusche, des sogenannten Spin-Ons, welche aufgebracht werden müssen, damit die axiale Dichtung dichtet, optimal zum Gewindestutzeneinsatz 1 abgeführt werden können.

## Patentansprüche

1. Verfahren zur Herstellung eines Filterkopfes (6) aus Kunststoff mit einem zumindest teilweise darin eingespritzten und als Kaltfließpressteil ausgebildeten, metallischen Gewindestutzeneinsatz (1), wobei der Filterkopf (6) einstückig mit diesem ausgebildete, radial verlaufende Kunststoffrippen (16) aufweist, die strahlenförmig vom Gewindestutzeneinsatz (1) ausgehen und die radial außen in eine einstückig mit dem Filterkopf (6) ausgebildete axiale Dichtfläche (17) desselben münden, bei dem
- der Gewindestutzeneinsatz (1) in eine komplementäre zylindrische Aufnahme (7) eines Kunststoffspritzgusswerkzeugs (4) eingelegt wird,
- der Gewindestutzeneinsatz (1) soweit in die Aufnahme (7) geschoben wird, bis er mit einer axialen Dichtfläche (3) an einem Aufnahmerand (8) anliegt,
- ein Dorn (9) durch den Gewindestutzeneinsatz (1) geschoben wird, bis er formschlüssig in eine Ausnehmung (12) an einer gegenüberliegenden Wand (10) eines Schiebers (11) des Spritzgusswerkzeugs (4) eingreift, wobei zwischen dem Gewindestutzeneinsatz (1) und der Wand (10) des Schiebers (11) ein Abstand verbleibt,
- Kunststoff in das Kunststoffspritzgusswerkzeug (4) eingespritzt wird und dabei den Gewindestutzeneinsatz (1) mit seiner axialen Dichtfläche (3) gegen den Aufnahmerand (8) drückt,
- nach dem Aushärten des Kunststoffes der Dorn (9) gezogen, der Schieber (11) verschoben und der Filterkopf (6) aus dem Kunststoffspritzgusswerkzeug (4) entfernt wird.

2. Verfahren nach Anspruch 1,
**dadurch gekennzeichnet,**
**dass** in der Aufnahme (7) des Kunststoffspritzgusswerkzeugs (4) eine komplementär zum Gewindestutzeneinsatz (1) ausgebildete Hülse (13) eingesetzt wird.

3. Filterkopf (6) hergestellt nach dem Verfahren nach Anspruch 1 oder 2, wobei der Filterkopf (6) einstückig mit diesem ausgebildete, radial verlaufende Kunststoffrippen (16) aufweist, die strahlenförmig von einem metallischen Gewindestutzeneinsatz (1) ausgehen und die radial außen in eine einstückig mit dem Filterkopf (6) ausgebildete axiale Dichtfläche (17) desselben münden.

4. Filterkopf nach Anspruch 3,
**dadurch gekennzeichnet,**
**dass** die Kunststoffrippen (16) radial außen fluchtend in die axiale Dichtfläche (17) übergehen.

5. Filterkopf nach Anspruch 3 oder 4,
**dadurch gekennzeichnet,**
**dass** die Kunststoffrippen (16) zum Gewindestutzeneinsatz (1) hin abfallen.

6. Filterkopf nach einem der Ansprüche 3 bis 5,
**dadurch gekennzeichnet,**
**dass** der Gewindestutzeneinsatz (1) eine Verdrehsicherung (14), insbesondere eine Rändelung (15), an einer Außenmantelfläche aufweist.

7. Filterkopf nach einem der Ansprüche 3 bis 6,
**dadurch gekennzeichnet,**
**dass** der Gewindestutzeneinsatz (1) drei radial gestufte Radialschultern (2,2',2") aufweist.

## Claims

1. Method for producing a filter head (6) from plastic, a threaded metal socket insert (1) being at least partly injected into the filter head, the threaded metal socket insert being designed as a cold extruded part, wherein the filter head (6) has radially extending plastic ribs (16) which are formed integrally with the filter head and radiate from the threaded socket insert (1) and open radially outwards into an axial sealing surface (17) of the filter head (6) which is formed integrally with the filter head, in which
- the threaded socket insert (1) is inserted into a complementary cylindrical receptacle (7) of a plastic injection mould (4),
- the threaded socket insert (1) is pushed into the receptacle (7) until it is in contact with an axial sealing surface (3) at a receptacle edge (8),
- a mandrel (9) is pushed through the threaded socket insert (1) until it positively engages in a recess (12) on an opposite wall (10) of a slide (11) of the injection mould (4), a distance remaining between the threaded socket insert (1) and the wall (10) of the slide (11),
- plastic is injected into the plastic injection mould (4) and presses the threaded socket insert (1) with its axial sealing surface (3) against the receiving edge (8),
- after the plastic has hardened, the mandrel (9) is pulled out, the slide (11) is moved and the filter head (6) is removed from the plastic injection mould (4).

2. Method according to claim 1,
**characterised in that**
a sleeve (13) complementary to the threaded socket insert (1) is inserted into the receptacle (7) of the plastic injection mould (4).

3. Filter head (6) produced according to the method according to claim 1 or 2, wherein the filter head (6) has radially extending plastic ribs (16) which are formed integrally with the filter head and radiate from a threaded metal socket insert (1) and open radially outwards into an axial sealing surface (17) of the filter head (6) which is formed integrally with the filter head.

4. Filter head according to claim 3,
**characterised in that**
the plastic ribs (16) merge radially outwards in an aligned manner into the axial sealing surface (17).

5. Filter head according to claim 3 or 4,
**characterised in that**
the plastic ribs (16) slope downwards to the threaded socket insert (1).

6. Filter head according to any of claims 3 to 5,
**characterised in that**
the threaded socket insert (1) has an anti-rotation device (14), in particular a knurl (15), on an outer casing surface.

7. Filter head according to any of claims 3 to 6,
**characterised in that**
the threaded socket insert (1) has three radially stepped radial shoulders (2, 2', 2").

## Revendications

1. Procédé de fabrication d'une tête de filtre (6) en plastique avec un insert de manchon fileté (1) métallique, moulé par injection au moins en partie dans celle-ci et réalisé en tant que pièce extrudée à froid, dans lequel la tête de filtre (6) présente des nervures plastiques (16) s'étendant radialement, réalisées d'un seul tenant avec celle-ci, qui partent en forme de rayon de l'insert de manchon fileté (1) et qui débouchent radialement à l'extérieur dans une surface d'étanchéité axiale (17) réalisée d'un seul tenant avec la tête de filtre (6), dans lequel
- l'insert de manchon fileté (1) est inséré dans un logement cylindrique complémentaire (7) d'un outil de moulage par injection de plastique (4),
- l'insert de manchon fileté (1) est poussé dans le logement (7) jusqu'à ce qu'il s'applique avec une surface d'étanchéité axiale (3) sur un bord de logement (8),
- un mandrin (9) est poussé par l'insert de manchon fileté (1), jusqu'à ce qu'il entre en prise par complémentarité de forme dans un évidement (12) au niveau d'une paroi opposée (10) d'un coulisseau (11) de l'outil de moulage par injection (4), dans lequel il reste une distance entre l'insert de manchon fileté (1) et la paroi (10) du coulisseau (11),
- du plastique est moulé par injection dans l'outil de moulage par injection de plastique (4) et presse ce faisant l'insert de manchon fileté (1) avec sa surface d'étanchéité axiale (3) contre le bord de logement (8),
- après la prise du plastique, le mandrin (9) est tiré, le coulisseau (11) déplacé et la tête de filtre (6) est retirée de l'outil de moulage par injection (4).

2. Procédé selon la revendication 1,
**caractérisé en ce**
**qu'**une douille (13) réalisée de manière complémentaire à l'insert de manchon fileté (1) est insérée dans le logement (7) de l'outil de moulage par injection (4).

3. Tête de filtre (6) fabriquée selon le procédé selon la revendication 1 ou 2, dans laquelle la tête de filtre (6) présente des nervures plastiques (16) s'étendant radialement, réalisées d'un seul tenant avec celle-ci, qui partent en forme de rayon de l'insert de manchon fileté (1) métallique et qui débouchent radialement à l'extérieur dans une surface d'étanchéité axiale (17) réalisée d'un seul tenant avec la tête de filtre (6).

4. Tête de filtre selon la revendication 3,
**caractérisée en ce**
**que** les nervures plastiques (16) se transforment radialement à l'extérieur à fleur dans la surface d'étanchéité axiale (17).

5. Tête de filtre selon la revendication 3 ou 4,
**caractérisée en ce**
**que** les nervures plastiques (16) descendent vers l'insert de manchon fileté (1).

6. Tête de filtre selon l'une quelconque des revendications 3 à 5,
**caractérisée en ce**
**que** l'insert de manchon fileté (1) présente un système anti-rotation (14), en particulier un moletage (15), au niveau d'une surface d'enveloppe extérieure.

7. Tête de filtre selon l'une quelconque des revendications 3 à 6,
**caractérisée en ce**
**que** l'insert de manchon fileté (1) présente trois épaulements radiaux étagés radialement (2, 2', 2").
